# FASCICULE DE BREVET EUROPEEN

(11) **EP 1 385 787 B1**
(45) Date de publication et mention de la délivrance du brevet: **03.05.2006**
(21) Numéro de dépôt: 02759745.9
(22) Date de dépôt: 27.03.2002
(51) Int. Cl.: C01F 7/44, C01F 7/02, B01J 21/04, B01J 20/08

(54) **AGGLOMERES D'ALUMINE, LEUR PROCEDE DE PREPARATION, ET LEURS UTILISATIONS COMME SUPPORT DE CATALYSEUR OU ADSORBANT**
ALUMINIUMOXIDAGGLOMERATE, VERFAHREN ZU IHRER HERSTELLUNG UND VERWENDUNG DAVON ALS ABSORPTIONSMITTEL ODER KATALYSATORTRÄGER
ALUMINA AGGLOMERATES, THE PREPARATION METHOD THEREOF AND USE OF SAME AS AN ABSORBENT OR CATALYST CARRIER

(30) Priorité: 04.04.2001 FR 0104587
(43) Date de publication de la demande: 04.02.2004
(73) Titulaire: AXENS, 92500 Rueil Malmaison (FR)
(72) Inventeur: LE LOARER, Jean-Luc, F-30340 Salindres (FR); NEDEZ, Christophe, F-30340 Salindres (FR)
(74) Mandataire: Benoist, François
(86) Numéro de dépôt international: PCT/FR2002/001071
(87) Numéro de publication internationale: WO 2002/081375

(56) Documents cités:
- EP-A- 0 656 413
- EP-A- 0 691 210
- EP-A- 0 849 223
- DE-A- 19 836 821
- DE-A- 19 843 241
- DE-C- 3 823 895
- FR-A- 2 764 208
- US-A- 5 055 443

## Description

L'invention concerne le domaine des agglomérés d'alumine, utilisables notamment comme adsorbants, comme supports de catalyseurs ou comme catalyseurs. Plus précisément, elle concerne de nouveaux agglomérés d'alumine présentant des caractéristiques physiques spécifiques, en particulier du point de vue de leur porosité, leur conférant des propriétés mécaniques particulièrement avantageuses. Elle concerne également un procédé d'obtention de tels agglomérés. Elle concerne enfin leur utilisation comme supports de catalyseurs, comme catalyseurs ou comme adsorbants.

Certains procédés catalytiques, tels que la catalyse hétérogène, par exemple dans le domaine de traitement des coupes pétrolières, ou le traitement des effluents gazeux comme les gaz d'échappement des moteurs à combustion interne, demandent l'utilisation de supports présentant une grande porosité et de bonnes propriétés mécaniques telles qu'une bonne résistance à l'écrasement et/ou l'attrition.

Les supports à base d'alumine répondent à ces critères, notamment quand ils ont subi un traitement hydrothermal, par exemple après la mise de l'alumine sous forme d'agglomérés. En effet, ce traitement permet d'améliorer de manière sensible les propriétés mécaniques des agglomérés.

Ce traitement hydrothermal consiste à imprégner les agglomérés d'alumine avec de l'eau ou une solution aqueuse acide, puis à porter ces agglomérés, disposés à l'intérieur d'un autoclave, à une température supérieure à 80°C. Le brevet européen n° EP-A-0 387 109, au nom de la demanderesse, décrit un exemple de procédé de réalisation avantageux de ce traitement hydrothermal.

Les agglomérés ainsi traités sont ensuite séchés, puis subissent un traitement thermique dit «calcination» à une température donnée. Cette température de calcination est choisie en fonction de la surface spécifique recherchée et de la température d'utilisation de ces supports.

L'efficacité de telles alumines est en grande partie fonction de leur porosité : une porosité élevée est souvent favorable pour les diverses applications envisagées, du fait de moindres contraintes diffusionnelles et/ou de tortuosité. Dans des applications où le support servira non seulement à une dispersion satisfaisante de la ou des phases actives métalliques apportées lors de la préparation du catalyseur, mais encore à retenir des contaminants, comme lors d'une opération d'hydrométallation, une porosité élevée est avantageuse. Toutefois, une porosité élevée est généralement considérée comme allant de pair avec une dégradation de la résistance mécanique du matériau. L'utilisation d'agglomérés d'alumine à porosité élevée est donc délicate dans des applications importantés, notamment dans les supports de catalyseurs pour lesquels la résistance mécanique de l'alumine gouverne en grande partie la durée d'utilisation du catalyseur. Il arrive qu'une dégradation de la résistance mécanique du catalyseur en cours d'utilisation ait des effets dramatiques, tant techniques qu'économiques, sur le procédé mis en oeuvre.

Le but de l'invention est de foumir aux utilisateurs d'agglomérés d'alumine des matériaux présentant un excellent compromis entre une porosité élevée et une résistance mécanique les rendant compatibles avec des utilisations exigeantes de ce dernier point de vue.

A cet effet, l'invention a pour objet des agglomérés d'alumine, du type obtenu par traitement d'un hydroxyde ou oxyhydroxyde d'aluminium, agglomération de l'alumine ainsi obtenue, traitement hydrothermal des agglomérés et calcination, caractérisés en ce que :
- ils présentent un V_{37Å} supérieur ou égal à 75 ml/100g, préférentiellement supérieur ou égal à 80 ml/100g, et très préférentiellement supérieur ou égal à 85 ml/100g ;
- ils présentent un V_{0.1µm} inférieur ou égal à 31 ml/100g, préférentiellement inférieur ou égal à 25 ml/100g, très préférentiellement inférieur ou égal à 20 ml/100g, optimalement inférieur ou égal à 15 ml/100g ; et en ce que
- ils présentent un V_{0,2µm} inférieur ou égal à 20 ml/100g, préférentiellement inférieur ou égal à 15 ml/100g, très préférentiellement inférieur ou égal à 10 ml/100g.

Ils présentent de préférence un V_{1µm} inférieur ou égal à 7 ml/100g, préférentiellement inférieur ou égal à 5,5 ml/100g, très préférentiellement inférieur ou égal à 4 ml/100g.

Ils présentent un rapport V_{0,1µm}/V_{0,2µm} supérieur ou égal à 1,5, préférentiellement supérieur ou égal à 2, très préférentiellement supérieur ou égal à 2,5.

Ils présentent de préférence simultanément un V_{37Å} supérieur ou égal à 80 ml/100g, un V_{0,1µm} inférieur ou égal à 15 ml/100g, un V_{0.2µm} inférieur ou égal à 10ml/100g, un V_{1µm} inférieur ou égal à 4 ml/100g et un rapport V_{0.1µm} / V_{0,2µm} supérieur ou égal à 2,5.

Ils ont préférentiellement été obtenus à partir d'hydrargillite déshydratée.

Ils se présentent de préférence sous forme de billes, ou de matériaux extrudés, ou de matériaux concassés, ou sous forme de monolithes.

L'invention a également pour objets un support de catalyseur, notamment pour l'industrie pétrolière ou pétrochimique, constitué par des agglomérés d'alumine selon le type précédent, un catalyseur intrinsèque, notamment pour l'industrie pétrolière ou pétrochimique, constitué par des agglomérés d'alumine selon le type précédent, et un adsorbant, notamment pour l'industrie pétrolière ou pétrochimique, constitué par des agglomérés d'alumine selon le type précédent.

L'invention a également pour objet un procédé de préparation d'agglomérés d'alumine du type précédent, selon lequel :
- on déshydrate brutalement par flashage un hydroxyde ou un oxyhydroxyde d'aluminium, préférentiellement de l'hydrargillite, pour obtenir une poudre d'alumine active ;
- on procède à une mise en forme de ladite poudre d'alumine active de manière à obtenir des billes d'une densité de remplissage en cru comprise entre 500 et 1100 kg/m³, préférentiellement incluse entre 700 et 950 kg/m³, et d'un diamètre compris majoritairement entre 0,8 et 10 mm, préférentiellement entre 1 et 5 mm ;
- on procède à un traitement thermique desdites billes de manière à leur procurer une surface spécifique comprise entre 50 et 420 m²/g ;
- on procède à un traitement hydrothermal desdites billes par imprégnation avec de l'eau ou une solution aqueuse préférentiellement acide, puis séjour dans un autoclave à une température supérieure à 80°C ;
- et on procède à une calcination, préférentiellement entre 500 et 1300°C, des agglomérés ainsi obtenus.

Après le traitement thermique suivant la granulation, les billes d'alumine ont de préférence un V_{37Å} supérieur à 65 ml/100g, préférentiellement supérieur à 70 m1/100g.

La poudre d'alumine active obtenue après la déshydratation de l'hydroxyde ou oxyhydroxyde d'aluminium est de préférence broyée, pour obtenir une poudre de granulométrie médiane d₅₀ comprise préférentiellement entre 5 et 25 µm.

La poudre d'alumine active obtenue après la déshydratation de l'hydroxyde ou de l'oxyhydroxyde d'aluminium est lavée de préférence avec de l'eau ou une solution aqueuse acide.

Préalablement à la granulation de ladite poudre d'alumine active, celle-ci subit de préférence un flashage.

L'invention a également pour objet un procédé de préparation d'agglomérés d'alumine du type précédent, selon lequel :
- on malaxe et on extrude un matériau à base d'alumine pour le mettre en forme ;
- on procède à un traitement thermique des matériaux extrudés ainsi obtenu, de manière à leur procurer une surface spécifique comprise entre 50 et 420 m²/g ;
- on procède à un traitement hydrothermal desdits matériaux extrudés, par imprégnation ave de l'eau ou une solution aqueuse préférentiellement acide, puis séjour dans un autoclave à une température supérieure à 80°C ;
- et on procède à une calcination, préférentiellement entre 500 et 1300°C, des agglomérés ainsi obtenus.

Ledit matériau à base d'alumine est, de préférence, de l'hydrargillite déshydratée.

Ledit matériau à base d'alumine peut aussi être issu de la précipitation de boehmite, pseudo-boehmite ou de bayerite, ou d'un mélange de tels matériaux.

Lors de la mise en forme de ladite poudre d'alumine ou dudit matériau à base d'alumine dans l'un des procédés précédents, on lui ajoute de préférence un ou des matériaux porogènes disparaissant par chauffage.

Lesdits matériaux porogènes sont de préférence choisis parmi la farine de bois, le charbon de bois, le soufre, les goudrons, des matières plastiques ou émulsions de matières plastiques, des alcools polyvinyliques, la naphtaline.

Ledit traitement hydrothermal est conduit de préférence à une température de 150 à 270°C, préférentiellement de 170 à 250°C, pendant une durée supérieure à 45 minutes, préférentiellement de 1 à 24 heures, très préférentiellement de 1,5 à 12 heures.

Ledit traitement hydrothermal est de préférence effectué à l'aide d'une solution aqueuse acide comprenant un ou plusieurs acides minéraux et/ou organiques.

Ladite solution aqueuse acide comprend également de préférence un ou plusieurs composés pouvant libérer des anions capables de se combiner avec les ions aluminium.

Comme on l'aura compris, l'invention consiste à obtenir, pour les agglomérés d'alumine, une répartition particulière des volumes occupés par les pores de différentes classes de diamètre. C'est dans ces conditions que l'on obtient des propriétés de résistance mécaniques égales, voire supérieures, à celles des agglomérés habituels présentant une porosité globale équivalente ou inférieure. Cette répartition particulière peut être obtenue à l'aide d'un procédé de fabrication des agglomérés qui se distingue des procédés habituels par la réalisation de l'étape de mise en forme de l'alumine selon des modalités particulières qui conduiront à l'obtention finale d'agglomérés présentant les caractéristiques souhaitées. Cette mise en forme est suivie par un bref traitement thermique à haute température, voire également précédée par un tel traitement.

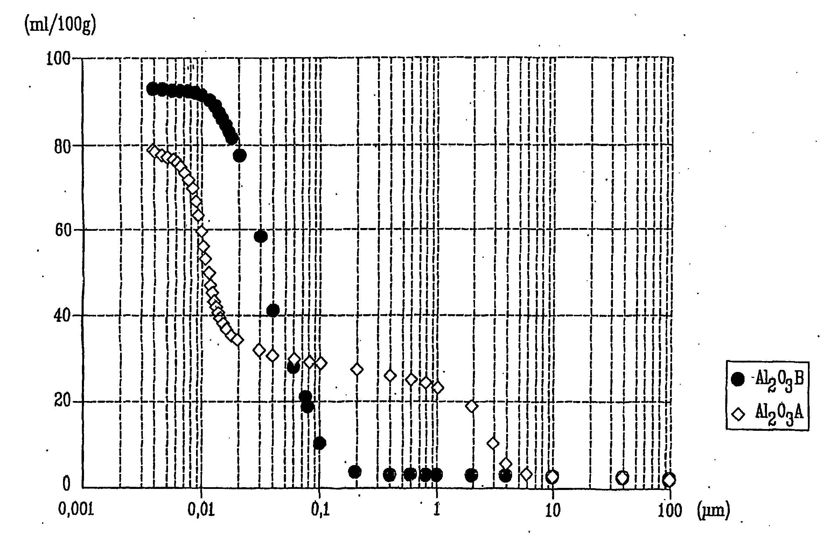

L'invention sera mieux comprise à la lecture de la description qui suit, donnée en référence à la figure unique annexée. Celle-ci représente la distribution poreuse d'une alumine A obtenue en tant que produit intermédiaire dans un exemple de mise en oeuvre du procédé selon l'invention, et la distribution poreuse d'une alumine finale B selon l'invention, obtenue à partir de cette alumine A.

Dans la suite de la description, les différentes grandeurs auxquelles on se référera sont définies de la façon suivante.

La morphologie des alumines est définie par l'indication des volumes occupés par les pores d'un diamètre supérieur ou égal à une série de diamètres donnés, à savoir :
- le volume occupé par les pores de diamètre supérieur ou égal à 37Å (V_{37Å});
- le volume occupé par les pores de diamètre supérieur ou égal à 0,1µm (V_{0,1µm});
- le volume occupé par les pores de diamètre supérieur ou égal à 0,2µm (V_{0,2µm});
- le volume occupé par les pores de diamètre supérieur ou égal à 1µm (V_{1µm}).

Ces volumes peuvent être mesurés, de manière classique, par la technique dite de « porosimétrie au mercure ».

A cet effet, l'échantillon d'alumine est placé dans une colonne, dans laquelle on introduit du mercure sous une pression P. Le mercure ne mouillant pas l'alumine, sa pénétration ou sa non-pénétration dans les pores de l'échantillon ayant un diamètre donné est fonction de la valeur de P. Les pores les plus fins nécessitent, pour être remplis, l'établissement d'une pression P plus élevée que pour le remplissage des pores plus grossiers. La mesure de la quantité de mercure pénétrant dans l'échantillon pour différentes valeurs de P permet de connaître le volume occupé par les pores de diamètre supérieur à des valeurs données de ce diamètre.

La résistance mécanique de l'échantillon est mesurée par deux grandeurs : la mesure de l'écrasement grain à grain (Egg) et la mesure par essai de cisaillement.

Pour mesurer l'Egg d'agglomérés, lesdits agglomérés sont initialement prétraités durant 2 heures à 300°C en four puis laissés à refroidir dans un dessiccateur. Ils sont ensuite pris un par un et placés entre le marteau et l'enclume d'un compressomètre jusqu'à rupture. Le résultat final est exprimé sous forme d'une force de rupture moyenne, mesurée sur une population de 20 agglomérés environ.

L'essai de cisaillement a pour objectif de déterminer la résistance mécanique à la friction d'agglomérés de forme sphérique. L'échantillon est mis dans une cellule en forme de couronne ; une pression est appliquée sur l'alumine à l'aide d'un cylindre ayant la même forme que la cellule, qui est alors mise en rotation. L'échantillon subit ainsi des efforts de cisaillement conduisant à une diminution de la taille des billes, du fait de la rotation de la cellule sous la pression exercée, la base du cylindre et le fond de la cellule étant par ailleurs crantés. L'analyse ici rapportée est conduite sous une pression de 0,4 bar, le cisaillement étant de 50. Les résultats sont exprimés en pourcentage de passant pour un tamis de 1,7mm à mailles carrées.

Un procédé de fabrication d'agglomérés d'alumine selon l'invention va à présent être décrit.

On procède d'abord, comme dans les procédés précédemment connus, à un chauffage intense et rapide dit « flashage », conduisant à une déshydratation brutale d'un hydroxyde d'aluminium (hydrargillite, gibbsite ou bayerite) ou d'un oxyhydroxyde d'aluminium (boehmite ou diaspore), à l'aide d'un courant de gaz chaud permettant d'éliminer et d'entraîner très rapidement l'eau évaporée. La température est de l'ordre de 400 à 1200°C, et le temps de contact du matériau à déshydrater avec les gaz est de l'ordre d'une fraction de seconde à 4 ou 5 secondes. On obtient ainsi de l'alumine active sous forme de poudre, ayant une granulométrie médiane d₅₀ de 40µm environ. Comme composé de départ, on utilise préférentiellement de l'hydrargillite. L'expérience montre que ce composé est le plus favorable pour l'obtention d'un produit final ayant les propriétés recherchées. De plus, il est relativement bon marché.

La poudre obtenue subit ensuite, de préférence et comme il est connu, un broyage amenant sa granulométrie médiane d₅₀ à 15µm environ, généralement entre 5 et 25µm.

La poudre peut ensuite, comme il est connu, subir un lavage à l'eau ou à l'eau acidifiée, qui a notamment pour but de diminuer sa teneur en métaux alcalins.

Selon l'invention, la poudre subit ensuite préférentiellement un flashage dans des conditions semblables à celles du flashage précédemment décrit afin de continuer à développer sa porosité.

Puis, selon l'invention, on procède à une opération de mise en forme de l'alumine. Selon le mode d'exécution préféré de l'invention, on procède à une granulation de la poudre d'alumine, par exemple au moyen d'une technologie tournante comme, à titre d'exemple, un drageoir tournant ou un tambour tournant Ce type de procédé permet d'obtenir des billes de diamètre et de répartitions de pores contrôlées, ces dimensions et ces répartitions étant, en général, créées pendant l'étape d'agglomération. La porosité peut être créée par différents moyens, comme le choix de la granulométrie de la poudre d'alumine ou l'agglomération de plusieurs poudres d'alumine de différentes granulométries. Une autre méthode consiste à mélanger à la poudre d'alumine, avant ou pendant l'étape d'agglomération, un ou des composés, appelés porogènes, disparaissant par chauffage et créant ainsi une porosité dans les billes. Comme composés porogènes utilisés, on peut citer, à titre d'exemple, la farine de bois, le charbon de bois, le soufre, des goudrons, des matières plastiques ou émulsions de matières plastiques telles que le polychlorure de vinyle, des alcools polyvinyliques, la naphtaline ou analogues. La quantité de composés porogènes ajoutés est déterminée par le volume désiré.

On vise la réalisation de billes d'une densité de remplissage en cru comprise entre 500 et 1100 kg/m³, préférentiellement entre 700 et 950 kg/m³ par exemple 810 kg/m³, et d'un diamètre compris majoritairement entre 0,8 et 10mm, de préférence entre 1 et 5 mm. Cette granulation est un procédé classique en lui-même, mais l'apport de l'invention se situe essentiellement dans le choix des caractéristiques des billes à l'issue de la granulation. Ces caractéristiques, en combinaison avec les traitements ultérieurs subis par les billes, vont conditionner les propriétés des agglomérés obtenus en fin de traitement,

Puis, toujours selon l'invention, on procède à un traitement thermique des billes qui permet d'obtenir une alumine dont la surface spécifique est de 50 à 420 m²/g. En dessous de 50m²/g, la réactivité de l'alumine pendant l'autoclavage ultérieur ne serait pas suffisante, et une surface spécifique de plus de 420m²/g correspondrait à des pores du produit final trop petits pour les applications envisagées. Cette alumine sera par la suite désignée sous le terme « alumine A ». Un exemple de distribution poreuse d'une telle alumine A est représenté sur la figure unique. Dans cet exemple, la surface spécifique de cette alumine A est de 187 m²/g. Sur cette figure unique, le diamètre des pores (en µm) est noté en abscisses, et le volume poreux cumulé (en ml/100g), c'est à dire le volume occupé par les pores de diamètre supérieur ou égal au diamètre en abscisses, est noté en ordonnées.

Pour obtenir une alumine finale conforme à l'invention, il est conseillé de conférer à l'alumine A un V_{37Å} supérieur à 65ml/100g, le plus souvent supérieur à 70 ml/100g.

Cette alumine A subit ensuite un traitement hydrothermal similaire à ceux connus dans l'art antérieur, par exemple dans le document EP-A-0 387 109 déjà cité. A titre d'exemple, ce traitement peut consister en une imprégnation de l'alumine A par une solution aqueuse contenant 4% de nitrate d'aluminium et 9% d'acide formique (ces pourcentages étant calculés en masse par rapport à la masse d'alumine introduite), suivie d'un séjour de l'alumine A imprégnée dans un autoclave à panier rotatif à 200°C pendant 5h30mn. De manière générale, le traitement hydrothermal est conduit à une température préférentiellement comprise entre 150 et 270°C, avantageusement incluse entre 170 et 250°C. La durée dudit traitement est en général supérieure à 45 minutes, de préférence comprise entre 1 et 24 heures, encore avantageusement incluse entre 1,5 et 12 heures. La solution aqueuse acide d'imprégnation comprend un ou plusieurs acides minéral(aux) et/ou organique(s). A titre d'exemple, on signalera l'acide nitrique, l'acide chlorhydrique, l'acide perchlorique, l'acide sulfurique, les acides faibles dont la solution a un pH inférieur à 4 comme l'acide acétique ou l'acide formique. Elle peut aussi comprendre un ou plusieurs composés pouvant libérer des anions capables de se combiner avec les ions aluminium. Ainsi, à titre d'exemple, on peut citer les composés comprenant un ion nitrate (comme le nitrate d'aluminium), chlorure, sulfate, perchlorate, chloroacétate, trichloroacétate, bromoacétate, dibromoacétate, et les anions de formule générale : R-COO⁻ comme les formiates et les acétates.

Enfin, comme il est habituel, l'alumine subit un traitement thermique final (ou calcination) à haute température (typiquement comprise entre 400 et 1300°C, par exemple à 800°C), qui permet d'obtenir la surface spécifique recherchée.

Les billes sont la forme préférée de l'invention, mais un autre conditionnement, par exemple, sous forme de matériaux extrudés, de matériaux concassés, de monolithes, est aussi envisageable, de même qu'une utilisation sous forme de poudre.

Selon un mode alternatif de l'invention, l'alumine peut donc également se présenter sous la forme d'extrudés d'alumine. Ceux-ci sont généralement obtenus par malaxage puis extrusion d'une matière à base d'alumine, suivie d'une calcination puis successivement, comme décrit précédemment, imprégnation, traitement hydrothermal puis traitement thermique post-mise en forme. La matière de départ peut être de nature très variée : elle peut être issue de la déshydratation partielle et rapide d'hydrargillite, ou de la précipitation de boehmite, pseudo-boehmite, bayérite ou d'un mélange de ces alumines. Au cours du malaxage, l'alumine peut être mélangée à des additifs, notamment des porogènes tels que définis précédemment.

La figure unique représente la distribution poreuse d'une alumine selon l'invention, dite « alumine B », réalisée selon l'exemple particulier de traitement hydrothermal et de calcination qui vient d'être décrit à partir de l'alumine A précédente. La calcination a conféré à cette alumine B une surface spécifique de 110m²/g.

On voit sur la figure unique que les opérations de traitement hydrothermal et de calcination ont conduit à l'obtention d'une alumine B dans laquelle, par rapport à l'alumine A de départ, le volume occupé par les pores de petite taille (<0,04 µm) a sensiblement augmenté. Surtout, le volume occupé par les pores de taille supérieure à 0,2 µm a considérablement diminué, au point de devenir quasiment négligeable.

Les alumines selon l'invention sont préférentiellement issues d'hydrargillite ; elles présentent un V_{37Å} d'au moins 75 ml/100g, de préférence supérieur à 80 ml/100g, encore préférentiellement supérieur à 85 ml/100g. Dans le même temps, leur V_{0,1µm} est inférieur ou égal à 30 ml/100g, de préférence inférieur ou égal à 25 ml/100g, encore préférentiellement inférieur à 20 ml/100g, voire même inférieur à 15 ml/100g. Elles présentent un V_{0,2µm} inférieur ou égal à 20 ml/100g, avantageusement inférieur ou égal à 15 ml/100g, voire inférieur ou égal à 10 ml/100g. Quant au V_{1µm}, il est intéressant qu'il ne dépasse pas 7 ml/100g, voire 5,5 ml/100g, préférentiellement 4 ml/100g. Le rapport V_{0,1µm}/V_{0,2µm} est préférentiellement supérieur ou égal à 1,5, voire supérieur à égal à 2, encore avantageusement supérieur à égal à 2,5.

Dans ces conditions, et lorsque les alumines selon l'invention se présentent sous la forme de billes de diamètres compris entre 2,0 et 2,8mm, elles ont un Egg minimal de 2 daN, de préférence égal ou supérieur à 2,5 daN, voire égal ou supérieur à 3 daN, encore avantageusement excédant 3,5 daN. Quant à l'essai de cisaillement mesuré dans les conditions précisées ci-dessus, il donne des valeurs inférieures à 4%, utilement inférieures à 3%, encore avantageusement inférieures à 2%, voire encore inférieures à 1 %.

Dans le Tableau I sont regroupées les caractéristiques de plusieurs alumines conformes à l'invention, obtenues en modulant les conditions expérimentales ayant conditionné la mise en forme des billes et le traitement hydrothermal consécutif. Leur granulométrie est, ici, systématiquement incluse entre 2,0 et 2,8mm. Une comparaison est effectuée avec des alumines produites d'une manière comparable, de même granulométrie, mais sans le même souci du respect de la maîtrise du profil de porosité. Toutes les surfaces spécifiques ont été amenées, par calcination, à 105 ± 5m²/g pour permettre une comparaison excluant l'influence de ce paramètre.

Les alumines 1 à 8 sont conformes à l'invention ; les alumines 9 à 11 sont des exemples comparatifs non conformes à l'invention.

Les surfaces spécifiques sont données en m²/g, tous les volumes en ml/100g, les Egg en daN, les mesures issues de l'essai de cisaillement en % (Cf. modes opératoires plus haut).

**Tableau I. Caractéristiques des alumines décrites**

| | Alumine | Surface spécifique | V_{37Å} | V_{0,1µm} | V_{0,2µm} | V_{1µm} | V_{0,1µm}/V_{0,2µm} | Egg | cisaillement |
|---|---|---|---|---|---|---|---|---|---|
| I | 1 | 110 | 93,9 | 19,4 | 6,6 | 2,7 | 2,9 | 3,4 | 0,8 |
| n | 2 | 104 | 92,2 | 30,3 | 9,4 | 3,2 | 3,2 | 3,0 | 0,5 |
| v | 3 | 105 | 84,3 | 14,0 | 6,9 | 2,1 | 2,0 | 4,5 | 0,7 |
| e | 4 | 103 | 87,2 | 27,8 | 13,5 | 3,8 | 2,1 | 3,3 | 1,5 |
| n | 5 | 106 | 87,2 | 26.4 | 17,5 | 5,3 | 1,5 | 3,0 | 1,6 |
| t | 6 | 105 | 101,2 | 30,5 | 15,5 | 5,0 | 2,0 | 2,9 | 1,8 |
| i | 7 | 110 | 86,2 | 7,0 | 2,7 | 2,1 | 2,6 | 6,6 | 0,5 |
| o | 8 | 102 | 87,8 | 9,9 | 3,8 | 2,0 | 2,6 | 6,3 | 0,9 |
| n | | | | | | | | | |
| exemples comparatifs | 9 | 105 | 91,6 | 34,0 | 24,9 | 7,4 | 1,4 | 1,6 | 6,9 |
| | 10 | 100 | 87,2 | 31,3 | 21,6 | 7,1 | 1,4 | 2,0 | 4,3 |
| | 11 | 104 | 85,7 | 32,3 | 22,5 | 5,9 | 1,4 | 1,8 | 4,9 |

Comme on peut le voir, une maîtrise précise de la densité des pores de diamètre supérieur ou égal à 0,1 µm et des pores de diamètre supérieur ou égal à 0,2 µm est, de manière inattendue et dans une proportion étonnante, au regard de la connaissance antérieure, essentielle pour parvenir à des agglomérés de résistance mécanique maximale, indépendamment du niveau de la porosité totale de l'alumine.

Tous les échantillons selon l'invention ont un V_{31Å} supérieur à 75 ml/100g et un V_{0,1µm} inférieur à 31 ml/100g. Ils ont aussi un V_{0,2µm} inférieur à 20 ml/100g. Ils ont aussi un V_{1µm} inférieur à 7 ml/100g et un rapport V_{0,1µm}/V_{0,2µm} d'au moins 1,5 conformément à des caractéristiques préférentielles de l'invention. On fait cependant remarquer que les caractéristiques qui ont été données comme préférentielles sont indépendantes les unes des autres et qu'il demeurerait conforme à l'invention d'en respecter certaines sans respecter les autres.

On notera que les échantillons de référence 9 à 11 ont tous un V_{37Å} élevé, conforme à l'une des caractéristiques obligatoires des alumines de l'invention. En revanche ils ont un V_{0,1µm} et un V_{0,2µm} plus élevés que le maximum exigé par l'invention, conjugués à un V_{1µm} supérieur à la limite supérieure préférentielle de l'invention. Cela traduit que ces échantillons présentent une quantité de pores de grand diamètre relativement plus importante que ce qu'exige l'invention. Ces échantillons n'ont, cependant, que des propriétés mécaniques relativement médiocres pour la résistance à l'écrasement (Egg) et la résistance à la friction (cisaillement).

Cette influence importante de la présence de pores de grand diamètre se retrouve dans l'examen des résultats des échantillons 1 à 8 selon l'invention. Les meilleurs résultats de résistance mécanique sont obtenus pour les échantillons 7 et 8, dont le V_{37Å} n'est pas exceptionnellement élevé, et ces échantillons se distinguent des autres par des valeurs de V_{0,1µm}, V_{0,2µm} et V_{1µm} particulièrement basses. On constate que cette répartition des pores procure à ces échantillons une résistance à l'écrasement très notablement supérieure à celle des autres échantillons, alors que leur résistance au cisaillement est au moins très bonne. Les meilleurs résultats sont obtenus avec l'échantillon 7 qui présente les valeurs de V_{0,1µm} et V_{0,2µm} les plus basses de la série.

On constate également que des échantillons (1, 2, 6) présentant un V_{37Å} très élevé, donc une porosité globale très importante, mais des valeurs de V_{0,1µm}, V_{0,2µm}, V_{1µm} et V_{0,1µm}/V_{0,2µm} dans les limites obligatoires ou préférentielles de l'invention, ont néanmoins des propriétés mécaniques toujours sensiblement supérieures à celles des échantillons de référence. Pourtant ceux-ci présentent une porosité globale plus faible qui irait, a priori, dans le sens d'une meilleure résistance mécanique. Là encore, la maîtrise de la présence des pores de diamètre supérieur à 0,1 µm, voire 0,2µm et 1µm dans les conditions précisées apparaît comme particulièrement avantageuse. La prise en compte du rapport V_{0,1µm}/V_{0,2µm} donne un indice de ce que doit être préférentiellement la répartition des diamètres des pores dans la gamme 0,1-0,2 µm.

L'invention trouve une application privilégiée dans l'obtention de supports de catalyseurs sous forme de billes, notamment pour l'industrie pétrolière comme pour l'industrie pétrochimique, où la combinaison d'une porosité élevée et d'une résistance mécanique élevée des supports procure des catalyseurs efficaces ayant une grande durée de vie. Ces catalyseurs peuvent être utilisés, par exemple, en hydrotraitement, particulièrement en hydrométallisation, pour diminuer la teneur en métaux d'une coupe d'hydrocarbures.

Ces agglomérés d'alumine sont aussi utilisables comme catalyseurs intrinsèques, ou comme adsorbants.

## Revendications

1. Agglomérés d'alumine, du type obtenu par traitement d'un hydroxyde ou oxyhydroxyde d'aluminium, agglomération de l'alumine ainsi obtenue, traitement hydrothermal des agglomérés et calcination, **caractérisés en ce que** :
- ils présentent un V_{37Å} supérieur ou égal à 75 ml/100g, préférentiellement supérieur ou égal à 80 ml/100g, et très préférentiellement supérieur ou égal à 85 ml/100g ;
- ils présentent un V_{0,1µm} inférieur ou égal à 31 ml/100g, préférentiellement inférieur ou égal à 25 ml/100g, très préférentiellement inférieur ou égal à 20 ml/100g, optimalement inférieur ou égal à 15 ml/100g ; et **en ce que**
- ils présentent un V_{0,2µm} inférieur ou égal à 20 ml/100g, préférentiellement inférieur ou égal à 15 ml/100g, très préférentiellement inférieur ou égal à 10 ml/100g.
ils présentent un rapport V_{0,1µm}/V_{0.2µm} supérieur ou égal à 1,5

2. Agglomérés d'alumine selon la revendication 1, **caractérisés en ce qu'**ils présentent un V_{1µm} inférieur ou égal à 7 ml/100g, préférentiellement inférieur ou égal à 5,5 ml/100g, très préférentiellement inférieur ou égal à 4 ml/100g.

3. Agglomérés d'alumine selon la revendication 1 ou 2, **caractérisés en ce qu'**ils présentent un rapport V_{0.1µm}/V_{0.2µm} supérieur ou égal à 2, très préférentiellement supérieur ou égal à 2,5.

4. Agglomérés d'alumine selon l'une des revendications 1 à 3, **caractérisés en ce qu'**ils présentent simultanément un V_{37Å} supérieur ou égal à 80 ml/100g, un V_{0.1µm} inférieur ou égal à 15 ml/100g, un V_{0.2µm} inférieur ou égal à 10ml/100g, un V_{1µm} inférieur ou égal à 4 ml/100g et un rapport V_{0.1µm} / V_{0,2µm} supérieur ou égal à 2,5.

5. Agglomérés d'alumine selon l'une des revendications 1 à 4, **caractérisés en ce qu'**ils ont été obtenus à partir d'hydrargillite déshydratée.

6. Agglomérés d'alumine selon l'une des revendications 1 à 5, **caractérisés en ce qu'**ils se présentent sous forme de billes.

7. Agglomérés d'alumine selon l'une des revendications 1 à 5, **caractérisés en ce qu'**ils se présentent sous forme de matériaux extrudés.

8. Agglomérés d'alumine selon l'une des revendications 1 à 5, **caractérisés en ce qu'**ils se présentent sous forme de matériaux concassés.

9. Agglomérés d'alumine selon l'une des revendications 1 à 5, **caractérisés en ce qu'**ils se présentent sous forme de monolithes.

10. Support de catalyseur, notamment pour l'industrie pétrolière ou pétrochimique, **caractérisé en ce qu'**il est constitué par des agglomérés d'alumine selon l'une des revendications 1 à 9.

11. Catalyseur intrinsèque, notamment pour l'industrie pétrolière ou pétrochimique, **caractérisé en ce qu'**il est constitué par des agglomérés d'alumine selon l'une des revendications 1 à 9.

12. Adsorbant, notamment pour l'industrie pétrolière ou pétrochimique, **caractérisé en ce qu'**il est constitué par des agglomérés d'alumine selon l'une des revendications 1 à 9.

13. Procédé de préparation d'agglomérés d'alumine selon la revendication 6, selon lequel:
- on déshydrate brutalement par flashage un hydroxyde ou un oxyhydroxyde d'aluminium, préférentiellement de l'hydrargillite, pour obtenir une poudre d'alumine active ;
- on procède à une mise en forme de ladite poudre d'alumine active de manière à obtenir des billes d'une densité de remplissage en cru comprise entre 500 et 1100 kg/m³, préférentiellement incluse entre 700 et 950 kg/m³, et d'un diamètre compris majoritairement entre 0,8 et 10 mm, préférentiellement entre 1 et 5 mm;
- on procède à un traitement thermique desdites billes de manière à leur procurer une surface spécifique comprise entre 50 et 420 m²/g;
- on procède à un traitement hydrothermal desdites billes par imprégnation avec de l'eau ou une solution aqueuse préférentiellement acide, puis séjour dans un autoclave à une température supérieure à 80°C;
- et on procède à une calcination, préférentiellement entre 500 et 1300°C, des agglomérés ainsi obtenus.

14. Procédé selon la revendication 13, **caractérisé en ce qu'**après le traitement thermique suivant la granulation, les billes d'alumine ont un V_{37Å} supérieur à 65 ml/100g, préférentiellement supérieur à 70 ml/100g.

15. Procédé selon l'une des revendications 13 ou 14, **caractérisé en ce que** la poudre d'alumine active obtenue après la déshydratation de l'hydroxyde ou oxyhydroxyde d'aluminium est broyée, pour obtenir une poudre de granulométrie médiane d₅₀ comprise préférentiellement entre 5 et 25 µm.

16. Procédé selon l'une des revendications 13 à 15, **caractérisé en ce que** la poudre d'alumine active obtenue après la déshydratation de l'hydroxyde ou de l'oxyhydroxyde d'aluminium est lavée avec de l'eau ou une solution aqueuse acide.

17. Procédé selon l'une des revendications 13 à 16, **caractérisé en ce que**, préalablement à la granulation de ladite poudre d'alumine active, celle-ci subit un flashage.

18. Procédé de préparation d'agglomérés d'alumine selon la revendication 7, selon lequel :
- on malaxe et on extrude un matériau à base d'alumine pour le mettre en forme ;
- on procède à un traitement thermique des matériaux extrudés ainsi obtenus, de manière à leur procurer une surface spécifique comprise entre 50 et 420 m²/g ;
- on procède à un traitement hydrothermal desdits matériaux extrudés, par imprégnation ave de l'eau ou une solution aqueuse préférentiellement acide, puis séjour dans un autoclave à une température supérieure à 80°C;
- et on procède à une calcination, préférentiellement entre 500 et 1300°C, des agglomérés ainsi obtenus.

19. Procédé selon la revendication 18, **caractérisé en ce que** ledit matériau à base d'alumine est de l'hydrargillite déshydratée.

20. Procédé selon la revendication 18, **caractérisé en ce que** ledit matériau à base d'alumine est issu de la précipitation de boehmite, pseudo-boehmite ou de bayerite, ou d'un mélange de tels matériaux.

21. Procédé selon l'une des revendications 13 à 20, **caractérisé en ce que**, lors de la mise en forme de ladite poudre d'alumine ou dudit matériau à base d'alumine, on lui ajoute un ou des matériaux porogènes disparaissant par chauffage.

22. Procédé selon la revendication 21, **caractérisé en ce que** lesdits matériaux porogènes sont choisis parmi la farine de bois, le charbon de bois, le soufre, les goudrons, des matières plastiques ou émulsions de matières plastiques, des alcools polyvinyliques, la naphtaline.

23. Procédé selon l'une des revendications 13 à 22, **caractérisé en ce que** ledit traitement hydrothermal est conduit à une température de 150 à 270°C, préférentiellement de 170 à 250°C, pendant une durée supérieure à 45 minutes, préférentiellement de 1 à 24 heures, très préférentiellement de 1,5 à 12 heures.

24. Procédé selon l'une des revendications 13 à 23, **caractérisé en ce que** ledit traitement hydrothermal est effectué à l'aide d'une solution aqueuse acide comprenant un ou plusieurs acides minéraux et/ou organiques.

25. Procédé selon la revendication 24, **caractérisé en ce que** ladite solution aqueuse acide comprend également un ou plusieurs composés pouvant libérer des anions capables de se combiner avec les ions aluminium.

## Patentansprüche

1. Agglomerate bzw. Presslinge des Aluminiumoxids von dem durch Behandlung eines Hydroxids oder Oxyhydroxids des Aluminiums, Agglomerierung des so erhaltenen Aluminiumoxids, Hydrothermalbehandlung der Agglomerate und Calcinierung erhaltenen Typs, **dadurch gekennzeichnet, dass**
- sie ein V_{37A} gleich oder größer 75 ml/100 g, bevorzugt gleich oder größer 80 ml/100 g und sehr bevorzugt gleich oder größer 85 ml/100 g aufweisen;
- sie ein V_{0,1}µm gleich oder kleiner 31 ml/100 g, bevorzugt gleich oder kleiner 25 ml/100 g, sehr bevorzugt kleiner oder gleich 20 ml/100 g sowie optimal kleiner oder gleich 15 ml/100 g aufweisen; und dass
- sie ein V_{0,2µm} kleiner oder gleich 20 ml/100 g, bevorzugt kleiner oder gleich 15 ml/100 g und stark bevorzugt kleiner oder gleich 10 ml/100 g aufweisen; und
- sie ein Verhältnis V_{0,1µm}/V_{0,2µm} größer oder gleich 1,5 aufweisen.

2. Agglomerate des Aluminiumoxids nach Anspruch 1, **dadurch gekennzeichnet, dass** sie ein V_{1µm} kleiner oder gleich 7 ml/100 g, bevorzugt kleiner oder gleich 5,5 ml/100 g und sehr bevorzugt kleiner oder gleich 4 ml/100 g aufweisen.

3. Agglomerate des Aluminiumoxids nach Anspruch 1 oder 2, **dadurch gekennzeichnet, dass** sie ein Verhältnis V_{0,1}µm/V_{0,2µm} größer oder gleich 2, stark bevorzugt größer oder gleich 2,5 aufinreisen.

4. Agglomerate des Aluminiumoxids nach einem der Ansprüche 1 bis 3, **dadurch gekennzeichnet, dass** sie gleichzeitig ein V_{37A} größer oder gleich 80 ml/100 g, ein V_{0.1µm} kleiner oder gleich 15 ml/100 g, ein V_{0,2µm} kleiner oder gleich 10 ml/100 g, ein V_{1µm} kleiner oder gleich 4 ml/100 g und ein Verhältnis V_{0.1µm}/V_{0.2µm} größer oder gleich 2,5 aufinreisen.

5. Agglomerate des Aluminiumoxids nach einem der Ansprüche 1 bis 4, **dadurch gekennzeichnet, dass** sie aus dehydratisiertem Hydrargillit erhalten wurden.

6. Agglomerate des Aluminiumoxids nach einem der Ansprüche 1 bis 5, **dadurch gekennzeichnet, dass** sie die Form von Kugeln aufweisen.

7. Agglomerate des Aluminiumoxids nach einem der Ansprüche 1 bis 5, **dadurch gekennzeichnet, dass** sie die Form extrudierter Stoffe aufweisen.

8. Agglomerate des Aluminiumoxids nach einem der Ansprüche 1 bis 5, **dadurch gekennzeichnet, dass** sie in Form grobzerkleinerter Materialien vorliegen.

9. Agglomerate des Aluminiumoxids nach einem der Ansprüche 1 bis 5, **dadurch gekennzeichnet, dass** sie die Form von Monolithen haben.

10. Katalysatorträger, insbesondere für die Erdöl- oder petrochemische Industrie, **dadurch gekennzeichnet, dass** er durch Agglomerate aus Aluminiumoxid nach einem der Ansprüche 1 bis 9 gebildet ist.

11. Intrinsic-Katalysator, insbesondere für die Erdöl- oder petrochemische Industrie, **dadurch gekennzeichnet, dass** er durch Agglomerate aus Aluminiumoxid nach einem der Ansprüche 1 bis 9 gebildet ist.

12. Adsorbens, insbesondere für die Erdöl- oder petrochemische Industrie, **dadurch gekennzeichnet, dass** es aus Agglomeraten des Aluminiumoxids nach einem der Ansprüche 1 bis 9 gebildet ist.

13. Verfahren zur Herstellung von Agglomeraten des Aluminiumoxids nach Anspruch 6, bei dem:
- man plötzlich durch Flashen ein Hydroxid oder ein Oxyhydroxid des Aluminiums, bevorzugt Hydrargillit dehydratisiert, um ein aktives Aluminiumoxidpulver zu erhalten;
- man eine Formgebung des aktiven Aluminiumoxidpulvers vornimmt, um Kugeln einer Rohfülldichte zwischen 500 und 1100 kg/m³, bevorzugt, Grenzen eingeschlossen, zwischen 700 und 950 kg/m³ und von einem Durchmesser, der überwiegend zwischen 0,8 und 10 mm, bevorzugt zwischen 1 und 5 mm, liegt, zu erhalten;
- man eine thermische Behandlung dieser Kugeln derart vornimmt, dass ihnen eine spezifische Oberfläche zwischen 50 und 420 m²/g verliehen wird;
- man eine Hydrothermalbehandlung dieser Kugeln durch Imprägnierung mit Wasser oder mit einer wässrigen bevorzugt sauren Lösung vornimmt, dann in einen Autoklaven bei einer Temperatur oberhalb 80°C einsetzt, und man eine Calcinierung, bevorzugt zwischen 500 und 1300°C, der so erhaltenen Agglomerate vornimmt.

14. Verfahren nach Anspruch 13, **dadurch gekennzeichnet, dass** nach der thermischen auf die Granulierung folgenden Behandlung die Aluminiumoxidkugeln einen V_{37A} höher als 65 ml/100 g und bevorzugt höher als 70 ml/100 g haben.

15. Verfahren nach einem der Ansprüche 13 oder 14, **dadurch gekennzeichnet, dass** das nach der Dehydratation des Hydroxids oder Oxyhydroxids des Aluminiums erhaltene aktive Aluminiumoxidpulver gebrochen und gemahlen wird, um ein Pulver mit einer mittleren Granulometrie d₅₀, bevorzugt zwischen 5 und 25 µm, zu erhalten.

16. Verfahren nach einem der Ansprüche 13 bis 15, **dadurch gekennzeichnet, dass** das nach Dehydratation des Hydroxids oder Oxyhydroxids des Aluminiums erhaltene Aluminiumoxidpulver mit Wasser oder einer sauren wässrigen Lösung gewaschen wird.

17. Verfahren nach einem der Ansprüche 13 bis 16, **dadurch gekennzeichnet, dass** vor der Granulierung dieses aktiven Aluminiumoxidpulvers dieses einer Flashbehandlung ausgesetzt wird.

18. Verfahren zur Herstellung von Agglomeraten des Aluminiumoxids nach Anspruch 7, wobei:
- man ein Material auf der Basis von Aluminiumoxid durchknetet/mischt und extrudiert, um es zu formen;
- man eine thermische Behandlung der so erhaltenen extrudierten Materialien vornimmt, derart, dass ihnen eine spezifische Oberfläche zwischen 50 und 420 m²/g verliehen wird;
- man eine Hydrothermalbehandlung dieser extrudierten Materialien durch Imprägnieren mit Wasser oder einer wässrigen bevorzugt sauren Lösung vornimmt und dann in einen Autoklaven bei einer Temperatur oberhalb 80°C einsetzt;
- und man eine Calcinierung, bevorzugt zwischen 500 und 1300°C, der so erhaltenen Agglomerate vornimmt.

19. Verfahren nach Anspruch 18, **dadurch gekennzeichnet, dass** dieses Material auf der Basis von Aluminiumoxid dehydratisiertes Hydrargillit ist.

20. Verfahren nach Anspruch 18, **dadurch gekennzeichnet, dass** dieses Material auf der Basis von Aluminiumoxid aus der Abscheidung von Boehmit, Pseudoboehmit oder Bayerit oder einem Gemisch dieser Materialien stammt.

21. Verfahren nach einem der Ansprüche 13 bis 20, **dadurch gekennzeichnet, dass** während der Formung dieses Aluminiumoxidpulvers oder dieses Materials auf der Basis von Aluminiumoxid man ihm eines oder mehrere der beim Erwärmen verschwindenden porogenen Materialien zusetzt.

22. Verfahren nach Anspruch 21, **dadurch gekennzeichnet, dass** diese porogenen Materialien gewählt sind aus Holzmehl, Holzkohle, Schwefel, den Teeren, plastischen Materialien oder Emulsionen plastischer Materialien, - Polyvinylalkoholen oder Naphtalin.

23. Verfahren nach einem der Ansprüche 13 bis 22, **dadurch gekennzeichnet, dass** diese Hydrothermalbehandlung bei einer Temperatur zwischen 150 und 270°C, bevorzugt zwischen 170 und 250°C, über einen Zeitraum von mehr als 45 Minuten, bevorzugt 1 bis 24 Stunden und sehr bevorzugt 1,5 bis 12 Stunden durchgeführt wird.

24. Verfahren nach einem der Ansprüche 13 bis 23, **dadurch gekennzeichnet, dass** diese Hydrothermalbehandlung mit Hilfe einer wässrigen sauren Lösung, die eines oder mehrere mineralische und/oder organische Säuren umfasst, durchgeführt wird.

25. Verfahren nach Anspruch 24, **dadurch gekennzeichnet, dass** diese saure wässrige Lösung ebenfalls eine oder mehrere Verbindungen umfasst, welche Anionen freisetzen können, die in der Lage sind, eine Kombination mit den Aluminiumionen einzugehen.

## Claims

1. Alumina agglomerates of the type obtained by the treatment of an aluminum hydroxide or oxyhydroxide, agglomeration of the alumina thus obtained, hydrothermal treatment of the agglomerates and calcination, **characterized in that**:
- they have a V_{37Å} of greater than or equal to 75 ml/100 g, preferably greater than or equal to 80 ml/100 g and even more preferably greater than or equal to 85 ml/100 g;
- they have a V_{0.1µm} of less than or equal to 31 ml/100 g, preferably less than or equal to 25 ml/100 g, even more preferably less than or equal to 20 ml/100 g and optimally less than or equal to 15 ml/100 g; and **in that**:
- they have a V_{0.2µm} of less than or equal to 20 ml/100 g, preferably less than or equal to 15 ml/100 g and even more preferably less than or equal to 10 ml/100 g.
- they have V_{0.1µm}/V_{0.2µm} ratio of greater than or equal to 1.5.

2. The alumina agglomerates as claimed in claim 1, **characterized in that** they have a V_{1µm} of less than or equal to 7 ml/100 g, preferably less than or equal to 5.5 ml/100 g and even more preferably less than or equal to 4 ml/100 g.

3. The alumina agglomerates as claimed in claim 1 or 2, **characterized in that** they have a V_{0.1µm}/V_{0.2µm} ratio of greater than or equal to 2 and even more preferably greater than or equal to 2.5.

4. The alumina agglomerates as claimed in one of claims 1 to 3, **characterized in that** they have simultaneously a V_{37Å} of greater than or equal to 80 ml/100 g, a V_{0 1µm} of less than or equal to 15 ml/100 g, a V_{0 2µm} of less than or equal to 10 ml/100 g, a V_{1µm} of less than or equal to 4 ml/100 g and a V_{0.1µm}/V_{0.2µm} ratio of greater than or equal to 2.5.

5. The alumina agglomerates as claimed in one of claims 1 to 4, **characterized in that** they have been obtained from dehydrated hydrargillite.

6. The alumina agglomerates as claimed in one of claims 1 to 5, **characterized in that** they are in the form of beads.

7. The alumina agglomerates as claimed in one of claims 1 to 5, **characterized in that** they are in the form of extruded materials.

8. The alumina agglomerates as claimed in one of claims 1 to 5, **characterized in that** they are in the form of crushed materials.

9. The alumina agglomerates as claimed in one of claims 1 to 5, **characterized in that** they are in the form of monoliths.

10. A catalyst support, especially for the-petroleum of petrochemical industry, **characterized in that** it consists of alumina agglomerates as claimed in one of claims 1 to 9.

11. An intrinsic catalyst, especially for the petroleum or petrochemical industry, **characterized in that** it consists of alumina agglomerates as claimed in one of claims 1 to 9.

12. An adsorbent, especially for the petroleum or petrochemical industry, **characterized in that** it consists of alumina agglomerates as claimed in one of claims 1 to 9.

13. A process for producing alumina agglomerates as claimed in claim 6, in which:
- an aluminum hydroxide or oxyhydroxide, preferably hydrargillite, undergoes flash dehydration in order to obtain an active alumina powder;
- said active alumina powder undergoes a forming operation so as to obtain beads with a green fill density of between 500 and 1100 kg/m³, preferably between 700 and 950 kg/m³ inclusive, and a diameter predominantly between 0.8 and 10 mm, preferably between 1 and 5 mm;
- said beads undergo a heat treatment so as to provide them with a specific surface area of between 50 and 420 m²/g;
- said beads undergo a hydrothermal treatment by impregnation with water or an aqueous solution, preferably aqueous acid solution, followed by residence in an autoclave at a temperature of above 80°C; and
- the agglomerates thus obtained are calcined, preferably between 500 and 1300°C.

14. The process as claimed in claim 13, **characterized in that**, after the heat treatment that follows granulation, the alumina beads preferably have a V_{37Å} of greater than 65 ml/100 g, preferably greater than 70 ml/100 g.

15. The process as claimed in either of claims 13 and 14, **characterized in that** the active alumina powder obtained after dehydrating the aluminum hydroxide or oxyhydroxide is ground in order to obtain a powder with a median particle size d₅₀ of preferably between 5 and 25 µm.

16. The process as claimed in one of claims 13 to 15, **characterized in that** the active alumina powder obtained after dehydrating the aluminum hydroxide or oxyhydroxide is washed with water or an aqueous acid solution.

17. The process as claimed in one of claims 13 to 16, **characterized in that**, prior to granulation of said active alumina powder, the latter undergoes a flash operation.

18. The process for producing alumina agglomerates as claimed in claim 7, in which:
- an alumina-based material is mixed and extruded in order to form it;
- the extruded materials thus obtained are subjected to a heat treatment so as to give them a specific surface area of between 50 and 420 m²/g;
- said extruded materials are subjected to a hydrothermal treatment by impregnation with water or with an aqueous solution, preferably an aqueous acid solution, followed by residence in an autoclave at a temperature of above 80°C; and
- the agglomerates thus obtained are calcined, preferably between 500 and 1300°C.

19. The process as claimed, in claim 18, **characterized in that** said alumina-based material is dehydrated hydrargillite.

20. The process as claimed in claim 18, **characterized in that** alumina-based material comes from the precipitation of boehmite, pseudo-boehmite or bayerite, or a mixture of such materials.

21. The process as claimed in one of claims 13 to 20, **characterized in that**, during the forming of said alumina powder or of said alumina-based material, one or more pore-forming materials that disappear on heating are added to it.

22. The process as claimed in claim 21, **characterized in that** said pore-forming materials are chosen from wood flour, charcoal, sulfur, tars, plastics or emulsions of plastics, polyvinyl alcohols, naphthalene.

23. The process as claimed in one of claims 13 to 22, **characterized in that** said hydrothermal treatment is carried out at a temperature of 150 to 270°C, preferably from 170 to 250°C, for a time of greater than 45 minutes, preferably from 1 to 24 hours and even more preferably from 1.5 to 12 hours.

24. The process as claimed in one of claims 13 to 23, **characterized in that** said hydrothermal treatment is carried out using an aqueous acid solution containing one or more mineral and/or organic acids.

25. The process as claimed in claim 24, **characterized in that** said aqueous acid solution also includes one or more compounds that can release anions capable of combining with the aluminum ions.
